# EUROPEAN PATENT APPLICATION

(11) **EP 4 836 498 A1**
(43) Date of publication of application: **04.11.2026**
(21) Application number: 23962904.1
(22) Date of filing: 29.12.2023
(51) Int. Cl.: H04W 24/04

(54) **COMMUNICATION METHOD, TERMINAL AND STORAGE MEDIUM**

(71) Applicant: Beijing Xiaomi Mobile Software Co., Ltd., Beijing 100085 (CN)
(72) Inventor: ZHAO, Li, Beijing 100085 (CN)
(74) Representative: Stöckeler, Ferdinand
(86) International application number: PCT/CN2023/143585
(87) International publication number: WO 2025/138230

(57) **Abstract**

Provided in the embodiments of the present disclosure are a communication method, a terminal and a storage medium. The method is executed by a terminal, and the method comprises: on the basis of a first result, determining whether a first cell is in a barred state, wherein the first result is used for indicating whether a system information block 1 (SIB1) has been acquired in the first cell, the barred state is a state in which the terminal is barred from camping on the first cell, and the first cell is a cell capable of sending the SIB1 on the basis of a request. The communication mechanism of the technical solution provided in the embodiments of the present disclosure can be adapted to communications following the introduction of on-demand SIB1 cells.

## Description

### FIELD

The present disclosure relates to the field of wireless communication technologies, and in particular to a communication method, a user equipment (UE) and a storage medium.

### BACKGROUND

In the field of communication technology, an on-demand system information block 1 (SIB1) cell is introduced. In a new radio (NR) system, if a terminal cannot acquire a master information block (MIB) or an SIB1, the terminal considers a current cell as barred, and the cell remains barred for up to 300 seconds. However, it is not suitable for the on-demand SIB1 cell.

### SUMMARY

After introducing an on-demand system information block 1 (SIB1) cell, a communication mechanism needs to be adjusted.

Embodiments of the present disclosure provide a communication method, a user equipment (UE), a communication device, and a storage medium.

In a first aspect, the embodiments of the present disclosure provide a communication method, performed by a user equipment (UE), including: determining whether a first cell is in a barred status based on a first result; where the first result indicates that a system information block 1 (SIB1) is available or not available in the first cell; the barred status is a status in which the UE is barred from camping on the first cell, and the first cell is a cell capable of transmitting an SIB1 based on a request.

In a second aspect, the embodiments of the present disclosure provide a communication method, performed by a network device, including: sending first information to a user equipment (UE); where the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; and the barred status is a status in which the UE is barred from camping on the first cell.

In a third aspect, the embodiments of the present disclosure provide a communication method, including: sending, by a network device, first information to a user equipment (UE); where the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; the barred status is a status in which the UE is barred from camping on the first cell; and the first cell is a cell capable of transmitting the SIB1 based on a request.

In a fourth aspect, the embodiments of the present disclosure provide a user equipment (UE), including: a transceiver module, configured to determine whether a first cell is in a barred status based on a first result; where the first result indicates that a system information block 1 (SIB1) is available or not available in the first cell; the barred status is a status in which the UE is barred from camping on the first cell; and the first cell is a cell capable of transmitting an SIB1 based on a request.

In a fifth aspect, the embodiments of the present disclosure provide a network device, including: a transceiver module, configured to send first information to a user equipment (UE); where the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; and the barred status is a status in which the UE is barred from camping on the first cell.

In a sixth aspect, the embodiments of the present disclosure provide a communication system, including a user equipment (UE) and a network device, where the UE is configured to perform the method according to the first aspect, and the network device is configured to perform the method according to the second aspect.

In a seventh aspect, the embodiments of the present disclosure provide a user equipment (UE), including: one or more processors; where the UE is configured to perform the method according to the first aspect.

In an eighth aspect, the embodiments of the present disclosure provide a network device, including: one or more processors; where the network device is configured to perform the method according to the second aspect.

In a ninth aspect, the embodiments of the present disclosure provide a storage medium for storing instructions that, when executed on a communication device, cause the communication device to perform the method according to the first aspect.

The communication mechanism of the technical solution provided by the embodiments of the present disclosure may be adapted to communication after introducing the on-demand SIB1 cell.

It should be understood that the foregoing general description and the following detailed description are merely for purposes of example and explanation, and are not intended to limit the embodiments of the present disclosure.

### BRIEF DESCRIPTION OF THE DRAWINGS

Accompanying drawings, which are incorporated into and constitute a part of this specification, illustrate embodiments consistent with the present disclosure, and together with the specification serve to explain principles of the embodiments of the present disclosure.
FIG. 1a is a schematic diagram illustrating an architecture of a communication system according to an embodiment of the present disclosure.
Fig. 1b is a schematic diagram illustrating a resource location according to an embodiment of the present disclosure.
FIG. 1c is a flow chart of a communication method according to an embodiment of the present disclosure.
FIG. 2a is a flow chart of a communication method according to an embodiment of the present disclosure.
FIG. 3a is a flow chart of a communication method according to an embodiment of the present disclosure.
FIG. 3b is a flow chart of a communication method according to an embodiment of the present disclosure.
FIG. 4a is a flow chart of a communication method according to an embodiment of the present disclosure.
FIG. 4b is a flow chart of a communication method according to an embodiment of the present disclosure.
FIG. 5a is a flow chart of a communication method according to an embodiment of the present disclosure.
FIG. 6a is a block diagram illustrating a user equipment (UE) according to an embodiment of the present disclosure.
FIG. 6b is a block diagram illustrating a network device according to an embodiment of the present disclosure.
FIG. 7a is a block diagram illustrating a user equipment (UE) according to an embodiment of the present disclosure.
FIG. 7b is a block diagram illustrating a communication device according to an embodiment of the present disclosure.

### DETAILED DESCRIPTION

Embodiments of the present disclosure provide a communication method, a user equipment (UE), a communication system, and a storage medium.

In a first aspect, the embodiments of the present disclosure provide a communication method, performed by a user equipment (UE), including: determining whether a first cell is in a barred status based on a first result; where the first result indicates that a system information block 1 (SIB1) is available or not available in the first cell; the barred status is a status in which the UE is barred from camping on the first cell, and the first cell is a cell capable of transmitting an SIB1 based on a request.

In the above embodiments, after introducing the first cell capable of transmitting the SIB1 based on a request, whether the first cell is in the barred status can be determined based on the first result of acquiring or not acquiring the SIB 1 in the first cell. In this way, the communication mechanism may be adapted to a situation after introducing the first cell, making communication reliable.

In combination with some embodiments of the first aspect, in some embodiments, determining whether the first cell is in the barred status based on the first result includes: determining that the SIB1 is not available in the first cell, and determining that the first cell is in the barred status.

In the above embodiments, in a case that it is determined that the SIB is not available in the first cell, it can be reliably determined that the first cell is in the barred status, so that another cell may be selected for camping in a timely manner.

In combination with some embodiments of the first aspect, in some embodiments, the method further includes: determining that a period for which the first cell is in the barred status is a first duration.

In the above embodiments, in a case that it is determined that the first cell is in the barred status, it can be reliably determined that the period for which the first cell is in the barred status is the first duration.

In combination with some embodiments of the first aspect, in some embodiments, where determining whether the first cell is in the barred status based on the first result includes: acquiring first information; determining whether the first cell is in the barred status based on the first result and a second result; where the second result indicates whether the first information is available or not available; and the first information indicates that the first cell is a cell capable of transmitting an SIB1 based on a request.

In the above embodiments, whether the first cell is in the barred status may be determined jointly based on the first result and the second result indicating whether acquiring or not acquiring the first information which indicates that the first cell is the cell capable of transmitting the SIB1 based on the request, so that it may be reliably determined that whether the first cell is in the barred status. In this way, the communication mechanism can be adapted to the situation after introducing the first cell, making communication reliable.

In combination with some embodiments of the first aspect, in some embodiments, where determining whether the first cell is in the barred status based on the first result and the second result includes one of: determining that the SIB1 is not available in the first cell and the first information is available, and determining that the first cell is in the barred status; or determining that the SIB1 is not available in the first cell and the first information is available, and determining that the first cell is not in the barred status.

In the above embodiment, in a case that it is determined that the SIB1 is not available in the first cell and that the first information is available, it may be determined that the first cell is in the barred status or not in the barred status, making a determination mechanism flexible.

In combination with some embodiments of the first aspect, in some embodiments, the method further includes: determining that a period for which the first cell is in the barred status is a second duration; where the second duration is less than a first duration.

In the above embodiment, it may be accurately determined that the period for which the first cell is in the barred status is the second duration, and the second less is less than the first duration.

In combination with some embodiments of the first aspect, in some embodiments, where the method further includes one of: determining the first information based on an information field of a master information block (MIB); determining the first information based on second information, where the second information is information acquired from the first cell or a third cell; determining the first information based on third information, where the third information indicates a physical cell identity (PCI); determining the first information based on fourth information, where the fourth information indicates a frequency list; or determining the first information based on a reference quantity, where the reference quantity is determined based on synchronization signal block (SSB) subcarrier offset (ssb-SubcarrierOffset) information in an MIB.

In the above embodiment, the first information may be flexibly determined.

In combination with some embodiments of the first aspect, in some embodiments, where the first cell is in the barred status, the method further includes: determining a second cell based on first configuration information included in an MIB; where the second cell is a cell on which the UE camps.

In the above embodiment, in a case that the first cell is in the barred status, the second cell can be determined for camping in a timely manner based on the first configuration information.

In combination with some embodiments of the first aspect, in some embodiments, where determining the second cell based on the first configuration information included in the MIB includes one of: determining that the first configuration information indicates a first value, and determining that the second cell is a cell on the same frequency as the first cell; determining that the first configuration information indicates a first value, and determining that the second cell is a cell on a different frequency layer from the first cell; determining that the first configuration information indicates a second value, and determining that the second cell is not a cell on the same frequency as the first cell; or determining that the first configuration information indicates a second value, and determining that the second cell is a cell on a different frequency layer from the first cell.

In the above embodiment, the second cell may be flexibly determined.

In combination with some embodiments of the first aspect, in some embodiments, the method further includes: determining that the UE camps on the second cell and acquires second configuration information, and determining that the first cell is no longer barred; where the second configuration information indicates information for acquiring an SIB1 in the first cell based on a request.

In the above embodiment, in a case that the second configuration information for indicating information of acquiring the SIB1 based on a request in the first cell is available in the second cell, it can be determined in a timely manner that the first cell is no longer barred.

In combination with some embodiments of the first aspect, in some embodiments, the second configuration information indicates a cell list, the cell list includes a cell supporting acquiring an SIB1 based on a request, and the cell list includes the first cell.

In combination with some embodiments of the first aspect, in some embodiments, where the first cell is a cell capable of transmitting the SIB1 based on a request, and the method further includes: receiving an MIB; where the MIB indicates a target cell, the target cell is a cell from which the UE capable of acquiring third configuration information, and the third configuration information indicates a resource for requesting the SIB1.

In the above embodiment, the target cell from which the UE can obtain the resource for requesting the SIB1 can be acquired through the MIB.

In combination with some embodiments of the first aspect, in some embodiments, the UE is a network energy saving capable user equipment (NES capable UE).

In a second aspect, the embodiments of the present disclosure provide a communication method, performed by a network device, including: sending first information to a user equipment (UE); where the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; and the barred status is a status in which the UE is barred from camping on the first cell.

In combination with some embodiments of the second aspect, in some embodiments, the first information indicates at least one of: a frequency list; or a reference quantity, where the reference quantity is determined based on synchronization signal block (SSB) subcarrier offset (ssb-SubcarrierOffset) information in a master information block (MIB).

In combination with some embodiments of the second aspect, in some embodiments, the method further includes: sending an MIB; where the MIB indicates a target cell, the target cell is a cell on which the UE is capable of acquiring third configuration information, and the third configuration information indicates a resource for requesting an SIB1.

In combination with some embodiments of the second aspect, in some embodiments, the UE is a network energy saving capable user equipment (NES capable UE).

In a third aspect, the embodiments of the present disclosure provide a communication method, including: sending, by a network device, first information to a UE; where the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; the barred status is a status in which the UE is barred from camping on the first cell; and the first cell is a cell capable of transmitting the SIB1 based on a request.

In a fourth aspect, the embodiments of the present disclosure provide a user equipment (UE), including: a transceiver module, configured to determine whether a first cell is in a barred status based on a first result; where the first result indicates that a system information block 1 (SIB1) is available or not available in the first cell; the barred status is a status in which the UE is barred from camping on the first cell; and the first cell is a cell capable of transmitting an SIB1 based on a request.

In a fifth aspect, the embodiments of the present disclosure provide a network device, including: a transceiver module, configured to send first information to a user equipment (UE); where the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; and the barred status is a status in which the UE is barred from camping on the first cell.

In a sixth aspect, the embodiments of the present disclosure provide a communication system, including a user equipment (UE) and a network device, where the UE is configured to perform the method according to the first aspect, and the network device is configured to perform the method according to the second aspect.

In a seventh aspect, the embodiments of the present disclosure provide a user equipment (UE), including: one or more processors; where the UE is configured to perform the method according to the first aspect.

In an eighth aspect, the embodiments of the present disclosure provide a network device, including: one or more processors; where the network device is configured to perform the method according to the second aspect.

In a ninth aspect, the embodiments of the present disclosure provide a storage medium for storing instructions that, when executed on a communication device, cause the communication device to perform the method according to the first aspect.

In a tenth aspect, the embodiments of the present disclosure provide a program product, when executed on a communication device, cause the communication device to perform the method described in the first aspect.

In an eleventh aspect, the embodiments of the present disclosure provide a computer program, when executed on a computer, cause the computer to perform the method described in the first aspect.

In a twelfth aspect, the embodiments of the present disclosure provide a chip or a chip system. The chip or chip system includes a processing circuit, which is configured to perform the method described in the first aspect.

It can be understood that the aforementioned UE, network device, communication system, storage medium, program product, computer program, chip or chip system each is used to perform the methods provided in the embodiments of the present disclosure. Therefore, for beneficial effects that can be achieved reference may be made to those described in the corresponding methods, and will not be repeated here.

Embodiments of the present disclosure provide a communication method, a UE, an access network device, a communication system, and a storage medium. In some embodiments, terms such as communication method, information processing method, and information transmission method may be used interchangeably, and terms such as communication system and information processing system may be used interchangeably.

The embodiments of the present disclosure are not exhaustive, but are merely illustrative of some embodiments, and are not intended to constitute a specific limitation on the scope of protection of the present disclosure. In the absence of contradiction, each step in a certain embodiment can be implemented as an independent embodiment, and steps can be combined arbitrarily. For example, a solution after removing some steps in a certain embodiment may also be implemented as an independent embodiment, and the order of steps in a certain embodiment can be exchanged arbitrarily. In addition, optional implementations in a certain embodiment can be combined arbitrarily. Furthermore, various embodiments may be combined arbitrarily, can be combined arbitrarily, for example, some or all steps of different embodiments can be combined arbitrarily, and a certain embodiment may be combined arbitrarily with optional implementations of other embodiments.

In various embodiments of the present disclosure, unless otherwise specified and there is no logical conflict, terms and/or descriptions among the embodiments are consistent and may be cross-referenced. Technical features in different embodiments may be combined according to their inherent logical relationships to form new embodiments.

The terms used in the embodiments of the present disclosure are only for the purpose of describing particular embodiments and do not constitute a limitation on the present disclosure.

In the embodiments of the present disclosure, unless otherwise specified, elements expressed in a singular form, such as "a", "an", "the", "above", "said", "aforementioned", "this", etc., may represent "one and only one", or "one or more", "at least one", etc. For example, when using articles such as "a", "an", "the" in English in translation, a noun after an article may be understood as a singular expression or a plural expression.

In the embodiments of the present disclosure, a term "multiple" means two or more.

In some embodiments, terms such as "at least one of ...", "one or more", "a plurality of" and "multiple" and the like may be used interchangeably.

In some embodiments, expressions such as "at least one of A or B", "A and/or B", "A in one case, B in another case", "in response to one case A, in response to another case B", etc., may, depending on circumstances, include the following technical solutions: in some embodiments, A (A is performed independently of B); in some embodiments, B (B is performed independently of A); in some embodiments, selecting to perform either A or B (A and B are selectively performed); in some embodiments, A and B (both A and B are performed). The same applies where there are more branches such as A, B, C, and the like.

In some embodiments, expressions such as "A or B" may, depending on circumstances, include the following technical solutions: in some embodiments, A (A is performed independently of B); in some embodiments, B (B is performed independently of A); in some embodiments, selecting to perform either A or B (A and B are selectively performed). The same applies where there are more branches such as A, B, C, and the like.

Prefixes such as "first" and "second" in the embodiments of the present disclosure are only used to distinguish different description objects, and do not constitute restrictions on a position, order, priority, quantity or content of the description objects. Statement of the description object refers to descriptions in the context of the claims or the embodiments, and should not constitute unnecessary restrictions due to the use of the prefixes. For example, if the description object is a "field", an ordinal number in front of the "field" in a "first field" and a "second field" does not limit the position or order between the "fields", and the "first" and "second" do not limit whether the "field" they modified are in the same message, nor do they limit the order of the "first field" and the "second field". As another example, if the description object is a "level", an ordinal number in front of the "level" in the "first level" and the "second level" does not limit the priority between the "levels". As another example, a number of the description objects is not limited by the ordinal number, and may be one or more. Taking a "first apparatus" as an example, a number of "apparatus" may be one or more. In addition, objects modified by different prefixes may be the same or different. For example, if the description object is "apparatus", the "first apparatus" and a "second apparatus" may be the same apparatus or different apparatus, and their types may be the same or different. As another example, if the description object is "information", "first information" and "second information" may be same information or different information, and their contents may be the same or different.

In some embodiments, "include A", "contain A", "used to indicate A", and "carry A" may be interpreted as directly carrying A or indirectly indicating A.

In some embodiments, terms such as "in response to ...", "in response to determining ...", "in a case that ...", "at a time of ...", "when ...", "if ...", "in case ..." etc. may be used interchangeably.

In some embodiments, terms such as "greater than", "greater than or equal to", "not less than", "more than", "more than or equal to", "not less than", "higher than", "higher than or equal to", "not lower than", and "above" may be used interchangeably, and terms such as "less than", "less than or equal to", "not greater than", "less than", "less than or equal to", "no more than", "lower than", "lower than or equal to", "not higher than" and "below" may be used interchangeably.

In some embodiments, an apparatus or a device may be interpreted as physical or virtual, and its name is not limited to a name recorded in the embodiments. In some cases, it may also be understood as "equipment", "device", "circuit", "network element", "node", "function", "unit", "section", "system", "network", "chip", "chip system", "entity", "subject" and the like.

In some embodiments, "network" may be interpreted as an apparatus included in the network, for example, an access network device, a core network device, etc.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, an acquisition of data and information, etc. may comply with laws and regulations of a country where the data and information are obtained.

In some embodiments, the data and information, etc. may be obtained after obtaining user's consent.

In addition, each element, each row, or each column in a table of the embodiments of the present disclosure may be implemented as an independent embodiment, and a combination of any elements, any rows, and any columns may also be implemented as an independent embodiment.

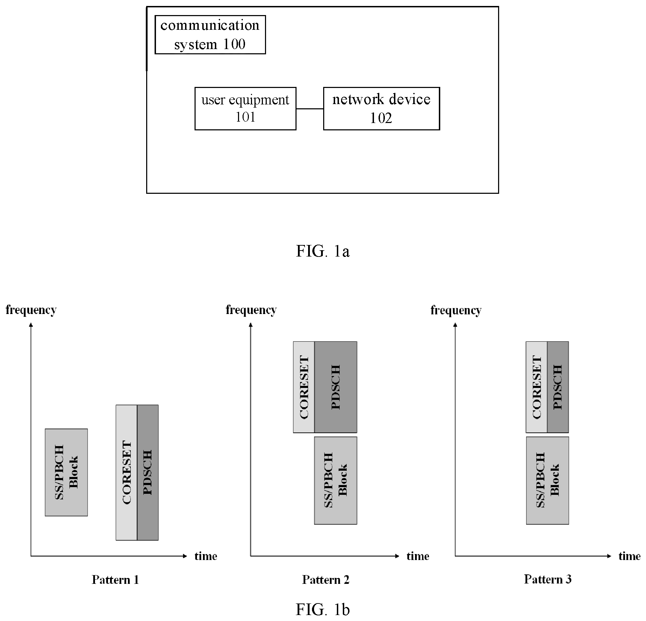

FIG. 1a is a schematic diagram illustrating an architecture of a communication system according to an embodiment of the present disclosure.

As shown in FIG. 1a, a communication system 100 includes a user equipment (UE) 101 and a network device 102. The network device 102 is an access network device or a core network device.

In some embodiments, the UE 101 includes, for example, a mobile phone, a wearable device, an internet of things (IoT) device, a vehicle with communication capabilities, a smart vehicle, a tablet (Pad), a computer with wireless transmission and reception capabilities, a virtual reality (VR) terminal device, an augmented reality (AR) terminal device, a wireless terminal device used in industrial control, a wireless terminal device used in self-driving, a wireless terminal device used in remote medical surgery, a wireless terminal device used in smart grid, a wireless terminal device used in transportation safety, a wireless terminal device used in smart city, or a wireless terminal device used in smart home.

In some embodiments, the access network device may be, for example, a node or device that connects a terminal to a wireless network. The access network device may include, but is not limited to, at least one of: an evolved NodeB (eNB), a next generation eNB (ng-eNB), a next generation NodeB (gNB), a NodeB (NB), a home NodeB (HNB), a home evolved NodeB (HeNB), a wireless relay device, a radio network controller (RNC), a base station controller (BSC), a base transceiver station (BTS), a baseband unit (BBU), a mobile switching center, a base station in a 6G communication system, an open base station (Open RAN), a cloud base station (Cloud RAN), a base station in other communication systems, or an access node in a Wi-Fi system.

In some embodiments, technical solutions of the present disclosure are applicable to an Open RAN architecture. In this case, interfaces between or within access network devices involved in the embodiments of the present disclosure may become internal interfaces of the Open RAN architecture, and procedures and information exchanges between these internal interfaces may be implemented through software or programs.

In some embodiments, an access network device may consist of a central unit (CU) and a distributed unit (DU). The CU may also be referred to as a control unit. By adopting a CU-DU structure, a protocol layer of the access network device may be split, with some functions of the protocol layer placed in the CU for centralized control, and part or all of the remaining functions of the protocol layer distributed in the DU. and the DU is centrally controlled by the CU, but not limited to this.

In some embodiments, the core network device may be a single device including one or more network elements, or may be multiple devices or device groups each including all or part of the one or more network elements. The network elements may be virtual or physical. A core network includes, for example, at least one of evolved packet core (EPC), 5G core network (5GCN), or next generation core (NGC).

It can be understood that the communication system described in the embodiments of the present disclosure is for the purpose of illustrating the technical solutions of the embodiments of the present disclosure clearly, and does not constitute a limitation on the technical solutions proposed in the embodiments of the present disclosure. A person of ordinary skill in the art may recognize that with an evolution of a system architecture and emergence of a new service scenario, the technical solutions provided in the embodiments of the present disclosure is also applicable to similar technical problems.

The following embodiments of the present disclosure may be applied to the communication system 100 shown in FIG. 1a, or part of entities, but are not limited thereto. The entities shown in FIG. 1a are examples, and the communication system may include all or part of the entities in FIG. 1a, or may include other entities other than FIG. 1a. A number and form of the entities are arbitrary. A connection relationship between the entities is an example. The entities may be connected or disconnected. A connection between the entities may be in any manner, which may be a direct connection or an indirect connection, and may be a wired connection or a wireless connection.

Various embodiments of the present disclosure may be applied to long term evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), global system for mobile communications (GSM^{®}), CDMA2000, ultra mobile broadband (UMB), IEEE 802.11 (Wi-Fi^{®}), IEEE 802.16 (WiMAX^{®}), IEEE 802.20, ultra-wideband (UWB), Bluetooth^{®}, public land mobile network (PLMN), a device-to-device (D2D) system, a machine-to-machine (M2M) system, an internet of things (IoT) system, vehicle-to-everything (V2X), systems using other communication methods, next-generation systems extended based on them, and the like. Furthermore, a combination of multiple systems (e.g., a combination of the LTE or the LTE-A and the 5G, etc.) may also be applied.

In some embodiments, the 5G has been introduced in response to people's pursuit of a higher data rate, lower latency, high-speed mobility, energy efficiency, as well as diversity and complexity of services in future life.

In some embodiments, main application scenarios of the 5G include: enhanced mobile broadband (eMBB), ultra reliable low latency communication (URLLC), and massive Machine type communication (mMTC).

In some embodiments, the eMBB still aims to provide users with multimedia content, services, and data, and its demand is growing rapidly. On the other hand, since the eMBB may be deployed in different scenarios, such as indoors, urban areas, and rural areas, differences in capabilities and requirements are also significant. Therefore, it cannot be generalized and must be analyzed in detail in conjunction with specific deployment scenarios.

In some embodiments, typical applications of the URLLC include industrial automation, power automation, remote medical operations (surgery), and traffic safety assurance.

In some embodiments, typical characteristics of the mMTC include high connection density, small data volume, delay-insensitive services, low cost of modules, and long service life.

After introducing 5G technology, energy consumption of a 5G base station is four times that of an LTE base station. Therefore, network energy saving is an important means for operators to reduce cost of operating 5G systems.

In some embodiments, in order to save power for a UE in a radio resource control (RRC) connected status, a wake up signal (WUS) is introduced. A duration for transmitting the WUS is defined at an offset before an on duration of a discontinuous reception (C-DRX) in a connected status of a UE. During this WUS duration, the WUS, i.e., downlink control information (DCI) 2-6, is sent, scrambled with a power saving-radio network temporary identifier (PS-RNTI), to indicate whether a UE should wake up and monitor a physical downlink control channel (PDCCH) during a subsequent UE C-DRX on duration.

In some embodiments, in order to save power for a UE in an RRC idle status or an inactive status, a paging WUS is introduced. That is, a paging WUS, i.e., a paging early indication (PEI), is transmitted at a certain time before a paging occasion (PO), to indicate whether the UE should monitor paging scheduling information during that PO. The PEI is DCI 2-7, scrambled with a PEI-RNTI.

In some embodiments, in order to reduce network energy consumption, a topic of network energy saving (NES) is initiated. Four supported NES functions include: SSB-less Scell, cell DTX/DRX, antenna port adaptation, and physical downlink shared channel (PDSCH) transmission power adaptation.

In some embodiments, for a network energy saving method of discontinuous cell transmission (DTX) or discontinuous reception (DRX), a network side configures a cell DTX or DRX working pattern via radio resource control (RRC) dedicated signaling, that is, configures a period, an offset, and/or an on-duration, and during the on-duration, the cell is in an active status and can perform data reception and transmission. Other periods are non-activated periods, and the network side does not perform data reception or transmission in principle, except for special cases, such as transmission of a synchronization signal block (SSB), a master information block (MIB) message, a system information block (SIB) message, a paging message, and a random access channel (RACH) message, which is not affected and proceed normally.

In some embodiments, DCI 2-9 is group common DCI and is used to notify a UE about activation or deactivation of the cell DTX and DRX. In the NES, it also includes cell switch off. Due to the activation of cell DTX/DRX or cell switch off, a NES capable UE cannot work or cannot meet a high performance requirement of a UE, and the UE needs to hand over to another cell in such cases. To this end, in the NES, a conditional handover (CHO) specifically for NES, i.e., NES CHO, is introduced. Additionally, a 1-bit DCI command is used to trigger a handover; that is, in a case that a NES CHO handover condition is satisfied and a DCI handover command is received from the network side, the handover is executed. In related technologies, DCI is DCI format 2-9, which is DCI that reuses the activation/deactivation of the cell DTX/DRX.

In some embodiments, system broadcast content includes an MIB, remaining minimum system information (RMSI) (i.e., system information block 1 (SIB1)), and other system information (OSI).

In some embodiments, an SIB1 is configured with configuration parameters related to cell selection, cell access, OSI scheduling, cell common configuration, access control, and configuration information related to cell capabilities. A control resource set (CORESET) of the SIB1 is configured in an MIB. There are three types of multiplexing relationships between an RMSI CORESET and a synchronization information block (SS/PBCH block) resource (see FIG. 1b: pattern 1: TDM; pattern 2: TDM+FDM; pattern 3: FDM). A UE obtains a resource location of a PDCCH based on RMSI CORESET information in a physical broadcast channel (PBCH), thereby further receiving the RMSI.

In some embodiments, in new radio, in order to save energy on the network side, the amount of system information broadcast by the base station by default is reduced to save radio resources. On-demand system information broadcast is proposed.

In some embodiments, except for MIB and SIB1, other SIBs may be requested on demand, that is, the base station broadcasts them only after receiving a system information (SI) request from the UE.

In some embodiments, SIB1 is configure with an indication of whether each SI is being broadcast. The UE can learn which SIBs require an SI request by reading the SIB1.

In some embodiments, methods for SI request include a MSG1-based SI request and a MSG3-based SI request.

In some embodiments, the MSG1-based SI request is based on a reserved preamble and/or a random access channel (RACH) resource.

In some embodiments, the MSG3-based SI request does not require a reserved RACH preamble and is defined as an RRCSystemInfoRequest message (MSG3).

In some embodiments, the UE learns whether to use the MSG1-based SI request or the MSG3-based SI request by reading the system information.

In some embodiments, if the base station provides configuration information of an SI request, i.e., si-Request-Config, in system information (SIB1), the MSG1-based SI request is used, otherwise, the MSG3-based SI request is used.

In some embodiments, after receiving an SI request acknowledgment, the UE receives the SI in a current modification period. The UE receives the SI until a modification period ends or until the SI is received. If an RACH failure is occurred during an SI request procedure, a subsequent UE behavior depends on a UE implementation.

In some embodiments, an SI request for a UE in the RRC connected status is not supported.

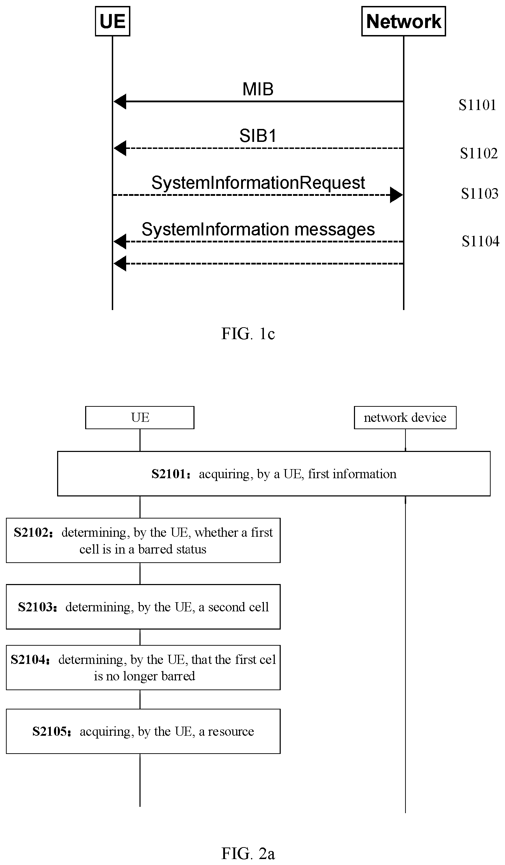

For example, please refer to FIG. 1c, which includes the following steps.

In S1101, a network device sends an MIB.

In S1102, the network device sends an SIB1.

In S1103, a UE sends a system information request (SystemInformationRequest).

In S1104, the network device sends system information messages (SystemInformation messages).

In some embodiments, in an NR system, if the UE cannot acquire the MIB or SIB1, the UE considers a current cell as barred, with a maximum barred duration of 300 s. However, this is obviously inappropriate for an on-demand SIB1 cell. It is necessary to clarify how to handle scenarios where the SIB is temporarily unavailable.

FIG. 2a is an interaction schematic diagram illustrating a method for indicating information according to an embodiment of the present disclosure. As shown in FIG. 2a, an embodiment of the present disclosure relates to a communication method, applied to a communication system 100, and the method may include the following steps.

In S2101, a user equipment (UE) acquires first information.

In some embodiments, the UE is a network energy saving capable user equipment (NES capable UE). The NES capable UE may be a UE supporting an on-demand system information block 1 (SIB1) function, that is, supporting requesting an SIB1 from a network device through request information.

In some embodiments, the UE is a UE in a radio resource control (RRC) non-connected status, for example, a UE in an RRC idle status or a UE in an RRC inactive status.

In some embodiments, the UE receives a master information block (MIB) sent by the network device, and the first information is carried in an information field included in the MIB. The UE determines the first information based on the information field of the MIB.

For example, a bit in the MIB indicates that a cell is an on-demand SIB1 required cell, or to indicate that the cell is not barred for an NES capable UE. For example, the bit may be a spare bit.

In some embodiments, the UE receives second information from the first cell, and the UE determines the first information based on the second information.

In some embodiments, the first cell is a cell capable of transmitting an SIB1 based on a request (an on-demand SIB1 required cell). That is, if the UE needs to acquire an SIB1 from the first cell, it needs to send request information for requesting an SIB1 to a network device corresponding to the first cell in order to acquire the SIB1.

In some embodiments, the UE receives the second information from a third cell, and the UE determines the first information based on the second information. It should be noted that the third cell is a cell different from the first cell, and the third cell may be the second cell to which the UE switches, which is not limited here.

In some embodiments, the second information and/or the third information may be stored in the UE in advance.

In some embodiments, the UE obtains, from stored information acquired from other cells or a current cell, information indicating that the cell is an on-demand SIB1 required cell.

In some embodiments, the UE receives the third information. The third information indicates a physical cell identifier (PCI). The UE determines the first information based on the third information.

In some embodiments, a system reserves a PCI range or PCI list of cells that support an SIB1 request.

In some embodiments, the UE receives fourth information, and the fourth information indicates a frequency list. The UE determines the first information based on the fourth information.

In some embodiments, the system reserves a frequency list of cells that support the SIB1 request.

In some embodiments, the UE determines a reference quantity, and the reference quantity is determined based on synchronization signal block (SSB) subcarrier offset (ssb-SubcarrierOffset) information in an MIB. The UE determines the first information based on the reference quantity.

For example, in a case that a value of K_{SSB} corresponding to the ssb-SubcarrierOffset in the MIB is 0 to 23 (for frequency range 1, FR1) or 0 to 11 (for frequency range 2, FR2), and the SIB1 is not available or the information field of the MIB is set as barred, the first information is determined.

In some embodiments, the first information indicates that the first cell is a cell capable of transmitting an SIB1 based on a request.

In some embodiments, the network device sends the first information to the UE. The first information indicates that a first cell is a cell capable of transmitting an SIB1 based on a request. A first result and a second result are used for the UE to determine whether the first cell is in the barred status. The first result indicates that the SIB1 is available or not available in the first cell. The second result indicates that the first information is available or not available. The barred status is a status in which the UE is barred from camping on the first cell. The first cell is a cell capable of transmitting the SIB1 based on a request.

In S2102, the UE determines whether the first cell is in the barred status.

In some embodiments, the UE determines whether the first cell is in the barred status, based on the first result.

In some embodiments, the first result indicates that the SIB1 is available or not available in the first cell.

In some embodiments, the barred status is the status in which the UE is barred from camping on the first cell. The first cell is a cell capable of transmitting the SIB1 based on a request.

In some embodiments, the UE determines that the SIB1 is not available in the first cell, and the UE determines that the first cell is in the barred status.

In some embodiments, the UE determines that the first cell is in the barred status, and the UE determines that a period for which the first cell is in the barred status is a first duration.

For example, if the UE acquires an MIB of a cell and attempts to acquire an SIB1, and if the UE fails to acquire the SIB1, the UE determines that the cell is in the barred status, and a maximum duration of the barred status is 300 seconds.

In some embodiments, the UE determines whether the first cell is in the barred status, based on the first result and the second result.

In some embodiments, the second result indicates that the first information is available or not available. The first information indicates that the first cell is a cell capable of transmitting the SIB1 based on a request

In some embodiments, the UE determines that the SIB1 is not available in the first cell and the first information is available, and the UE determines that the first cell is in the barred status.

In some embodiments, the UE determines that the SIB1 is not available in the first cell and the first information is available, and the UE determines that the first cell is not in the barred status.

In some embodiments, the UE determines that a period for which the first cell is in the barred status is a second duration. The second duration is less than a first duration.

For example, if the UE acquires an MIB of a cell and attempts to acquire an SIB1, and if the UE fails to acquire the SIB1, the UE determines that the cell is in the barred status. If the UE can learn that the cell is the on-demand SIB1 required cell, the UE determines that a maximum period for which the cell is in the barred status is 3 seconds (3 seconds are used an example, in any case a value shorter than 300 seconds).

For example, if the UE acquires an MIB of a cell and attempts to acquire an SIB1, if the UE fails to acquire the SIB1, and if the UE can determine that the cell is the on-demand SIB1 required cell, then the UE determines that the cell is not barred, i.e., the cell is not in a barred status.

In S2103, the UE determines the second cell.

In some embodiments, the second cell is determined based on first configuration information included in the MIB.

In some embodiments, the second cell is a cell on which the UE camps.

In some embodiments, the UE determines that the first configuration information indicates a first value, and determines that the second cell is a cell on the same frequency as the first cell.

In some embodiments, the UE determines that the first configuration information indicates a first value, and determines that the second cell is a cell on a different frequency layer from the first cell.

In some embodiments, the UE determines that the first configuration information indicates a second value, and determines that the second cell is not a cell on the same frequency as the first cell.

In some embodiments, the UE determines that the first configuration information indicates a second value, and determines that the second cell is a cell on a different frequency layer from the first cell.

For example, based on a configuration of intraFreqReselection in the MIB: if the configuration indicates a first value (e.g., "allowed"), the UE may select a neighbor cell on the same frequency as a certain cell or a cell on a different frequency layer. If the configuration indicates a second value (e.g., "not allowed"), the UE may not select a neighbor cell on the same frequency as the certain cell and can only select a cell on a different frequency layer.

In some embodiments, the UE camps on the second cell.

In S2104, the UE determines that the first cell is no longer barred.

In some embodiments, the UE determines that the UE camps on the second cell and acquires second configuration information, and determines the first cell is no longer barred.

In some embodiments, the second configuration information indicates information for acquiring an SIB1 in the first cell based on a request.

In some embodiments, the second configuration information indicates a cell list, the cell list includes a cell supporting acquiring an SIB1 based on a request, and the cell list includes the first cell.

For example, if the UE selects the second cell and acquires configuration information for requesting the SIB1 of the first cell from which it previously failed to acquire the SIB1, or acquires, via a neighbor cell, a cell list that supports an SIB1 request and the cell list includes the first cell, then the UE lifts a restriction that the cell is in a barred status for 300 seconds.

In S2105, the UE acquires a resource.

In some embodiments, the UE acquires a resource.

In some embodiments, the resource is a resource for requesting the SIB1.

In some embodiments, an MIB is received. The MIB indicates a target cell, the target cell is a cell from which the UE capable of acquiring third configuration information, and the third configuration information indicates a resource for requesting the SIB1.

For example, if the UE cannot acquire the SIB1 in the current cell and can determine that the current cell is a cell supporting the SIB1 request, then the MIB may further indicate a target cell from which the UE can acquire resource configuration information for requesting the SIB1, such as a PCI or frequency information, or PCI and frequency information.

In some embodiments, a term "information" may be used interchangeably with terms such as "message", "signal", "signaling", "report", "configuration", "indication", "instruction", "command", "channel", "parameter", "field", "data", and the like.

In some embodiments, a term "send" may be used interchangeably with terms such as "transmit", "report", "transfer", and the like.

The method for indicating information involved in the embodiments of the present disclosure may include at least one step of S2101 to S2105. For example, S2101 may be implemented as an independent embodiment, S2102 may be implemented as an independent embodiment, S2103 may be implemented as an independent embodiment, S2104 may be implemented as an independent embodiment, and S2105 may be implemented as an independent embodiment. A combination of S2102 and S2103 may be implemented as an independent embodiment, a combination of S2102, S2103 and S2104 may be implemented as an independent embodiment, a combination of S2102, S2103 and S2105 may be implemented as an independent embodiment, a combination of S2102, S2103, S2104 and S2105 may be implemented as an independent embodiment, and a combination of S2101, S2102 and S2103 may be implemented as an independent embodiment, but is not limited thereto. It should be noted that each step may be implemented independently, and, in the absence of any contradiction, may be performed in any order or freely combined.

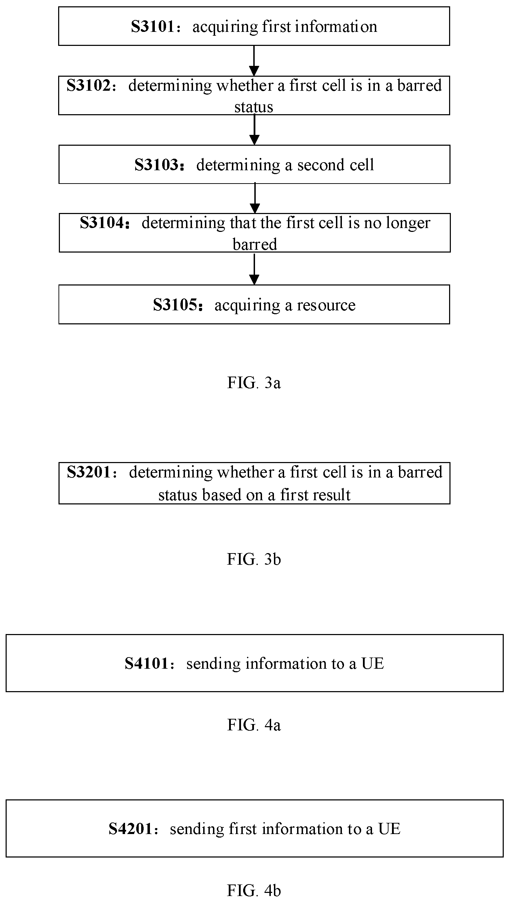

FIG. 3a is a flow chart of a method for indicating information according to an embodiment of the present disclosure. As shown in FIG. 3a, an embodiment of the present disclosure relates to a communication method, performed by a UE 101, and the method may include the following steps.

In S3101, first information is acquired.

In some embodiments, for optional implementations of S3101, reference may be made to the optional implementations of S2101 in FIG. 2a and other relevant parts of the embodiments related to FIG. 2a, and details will not be repeated here.

In some embodiments, the UE receives first information sent by an access network device, but is not limited thereto, and may also receive first information sent by other entities.

In some embodiments, the UE acquires first information specified by a protocol.

In some embodiments, the UE acquires first information from an upper layer.

In some embodiments, the UE performs processing to acquire the first information.

In some embodiments, S3101 is omitted, and the UE autonomously implements a function indicated by the first information, or the above function is default or by default.

In S3102, whether a first cell is in a barred status is determined.

In some embodiments, for optional implementations of S3102, reference may be made to the optional implementations of S2102 in FIG. 2a and other relevant parts of the embodiments related to FIG. 2a, and details will not be repeated here.

In S3103, a second cell is determined.

In some embodiments, for optional implementations of S3103, reference may be made to the optional implementations of S2103 in FIG. 2a and other relevant parts of the embodiments related to FIG. 2a, and details will not be repeated here.

In S3104, it is determined the first cell is no longer barred.

In some embodiments, for optional implementations of S3104, reference may be made to the optional implementations of S2104 in FIG. 2a and other relevant parts of the embodiments related to FIG. 2a, and details will not be repeated here.

In S3105, a resource is acquired.

In some embodiments, for optional implementations of S3105, reference may be made to the optional implementations of S2105 in FIG. 2a and other relevant parts of the embodiments related to FIG. 2a, and details will not be repeated here.

In some embodiments, the UE receives information of a resource sent by an access network device, but is not limited thereto, and may also receive information of a resource sent by other entities.

In some embodiments, the UE acquires a resource specified by a protocol.

In some embodiments, the UE acquires a resource from an upper layer.

In some embodiments, the UE performs processing to acquire a resource.

In some embodiments, S3105 is omitted, and the UE autonomously implements a resource indication, or the above function is default or by default.

The method for indicating information involved in the embodiments of the present disclosure may include at least one of S3101 to S3105. For example, S3101 may be implemented as an independent embodiment, S3102 may be implemented as an independent embodiment, S3103 may be implemented as an independent embodiment, S3104 may be implemented as an independent embodiment, and S3105 may be implemented as an independent embodiment. A combination of S3102 and S3103 may be implemented as an independent embodiment, a combination of S3102, S3103 and S3104 may be implemented as an independent embodiment, a combination of S3102, S3103 and S3105 may be implemented as an independent embodiment, a combination of S3102, S3103, S3104 and S3105 may be implemented as an independent embodiment, and a combination of S3101, S3102 and S3103 may be implemented as an independent embodiment, but is not limited thereto. It should be noted that each step may be implemented independently, and, in the absence of any contradiction, may be performed in any order or freely combined.

FIG. 3b is a flow chart of a method for indicating information according to an embodiment of the present disclosure. As shown in FIG. 3b, an embodiment of the present disclosure relates to a communication method performed by a UE 101, and the method may include the following steps.

In S3201, whether a first cell is in a barred status is determined based on a first result.

In some embodiments, the first result indicates that a system information block 1 (SIB1) is available or not available in the first cell. The barred status is a status in which the UE is barred from camping on the first cell. The first cell is a cell capable of transmitting an SIB1 based on a request.

In some embodiments, for optional implementations of S3201, reference may be made to the optional implementations of S2102 in FIG. 2a and other relevant parts of the embodiments related to FIG. 2a, and details will not be repeated here.

In some embodiments, determining whether the first cell is in the barred status based on the first result includes: determining that the SIB1 is not available in the first cell, and determining that the first cell is in the barred status.

In some embodiments, the method further includes: determining that a period for which the first cell is in the barred status is a first duration.

In some embodiments, determining whether the first cell is in the barred status based on the first result includes: acquiring first information; determining whether the first cell is in the barred status based on the first result and a second result. The second result indicates whether the first information is available or not available. The first information indicates that the first cell is a cell capable of transmitting an SIB1 based on a request.

In some embodiments, determining whether the first cell is in the barred status based on the first result and the second result includes one of: determining that the SIB1 is not available in the first cell and the first information is available, and determining that the first cell is in the barred status; or determining that the SIB1 is not available in the first cell and the first information is available, and determining that the first cell is not in the barred status.

In some embodiments, the method further includes: determining that a period for which the first cell is in the barred status is a second duration. The second duration is less than a first duration.

In some embodiments, the method further includes one of: determining the first information based on an information field of a master information block (MIB); determining the first information based on second information, where the second information is information acquired from the first cell or a third cell; determining the first information based on third information, where the third information indicates a physical cell identity (PCI); determining the first information based on fourth information, where the fourth information indicates a frequency list; or determining the first information based on a reference quantity, where the reference quantity is determined based on synchronization signal block (SSB) subcarrier offset (ssb-SubcarrierOffset) information in an MIB.

In some embodiments, the first cell is in the barred status, the method further includes: determining a second cell based on first configuration information included in an MIB. The second cell is a cell on which the UE camps.

In some embodiments, determining the second cell based on the first configuration information included in the MIB includes one of: determining that the first configuration information indicates a first value, and determining that the second cell is a cell on the same frequency as the first cell; determining that the first configuration information indicates a first value, and determining that the second cell is a cell on a different frequency layer from the first cell; determining that the first configuration information indicates a second value, and determining that the second cell is not a cell on the same frequency as the first cell; or determining that the first configuration information indicates a second value, and determining that the second cell is a cell on a different frequency layer from the first cell.

In some embodiments, the method further includes: determining that the UE camps on the second cell and acquires second configuration information, and determining the first cell is no longer barred. The second configuration information indicates information for acquiring an SIB1 in the first cell based on a request.

In some embodiments, the second configuration information indicates a cell list, the cell list includes a cell supporting acquiring an SIB1 based on a request, and the cell list includes the first cell.

In some embodiments, the first cell is a cell capable of transmitting the SIB1 based on a request, and the method further includes: receiving an MIB. The MIB indicates a target cell, the target cell is a cell from which the UE capable of acquiring third configuration information, and the third configuration information indicates a resource for requesting the SIB1.

In some embodiments, the UE is a network energy saving capable user equipment (NES capable UE).

FIG. 4a is a flow chart of a method for indicating information according to an embodiment of the present disclosure. As shown in FIG. 4a, an embodiment of the present disclosure relates to a communication method, performed by a network device 102, and the method may include the following steps.

In S4101, information is sent to a UE.

In some embodiments, the information includes at least one of the following kinds of information: first information, second information, third information, fourth information, first configuration information, second configuration information, or third configuration information.

In some embodiments, for optional implementations of S4101, reference may be made to the optional implementations of S2101 to S2105 in FIG. 2a and other relevant parts of the embodiments related to FIG. 2a, and details will not be repeated here.

FIG. 4b is a flow chart of a method for indicating information according to an embodiment of the present disclosure. As shown in FIG. 4b, an embodiment of the present disclosure relates to a communication method, performed by a network device 102, and the method may include the following steps.

In S4201, first information is sent to a UE.

In some embodiments, the first information indicates that a first cell is a cell capable of transmitting a system information block 1 (SIB1) based on a request.

In some embodiments, a first result and a second result are used for the UE to determine whether the first cell is in a barred status. The first result indicates that the SIB1 is available or not available in the first cell.

In some embodiments, the barred status is a status in which the UE is barred from camping on the first cell

In some embodiments, the first cell is a cell capable of transmitting the SIB1 based on a request.

In some embodiments, the first information indicates at least one of: a frequency list; or a reference quantity, where the reference quantity is determined based on synchronization signal block (SSB) subcarrier offset (ssb-SubcarrierOffset) information in a master information block (MIB).

In some embodiments, the method further includes: sending an MIB. The MIB indicates a target cell, the target cell is a cell on which the UE is capable of acquiring third configuration information, and the third configuration information indicates a resource for requesting an SIB1.

In some embodiments, the UE is a network energy saving capable user equipment (NES capable UE).

In some embodiments, for optional implementations of S4101, reference may be made to the optional implementations of S2101 in FIG. 2a and other relevant parts of the embodiments related to FIG. 2a, and details will not be repeated here.

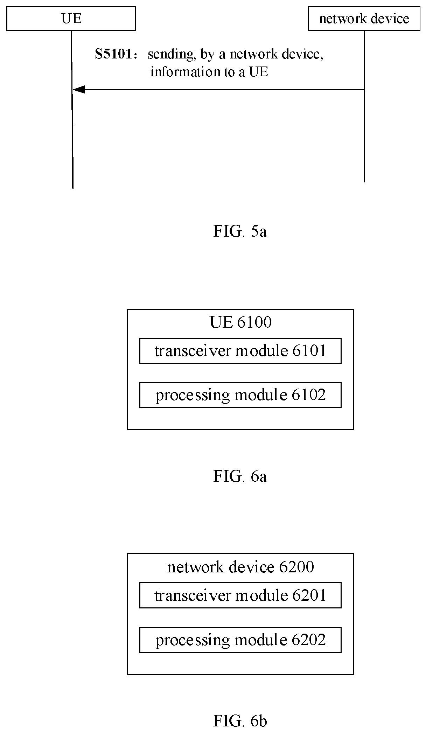

FIG. 5a is a flow chart of a method for indicating information according to an embodiment of the present disclosure. As shown in FIG. 5a, an embodiment of the present disclosure relates to a communication method, applied to a communication system 100, and the method may include the following steps.

In S5101, a network device sends information to a UE.

In some embodiments, the information includes at least one of the following kinds of information: first information, second information, third information, fourth information, first configuration information, second configuration information, or third configuration information.

In some embodiments, for optional implementations of S5101, reference may be made to the optional implementations of S2101 to S2105 in FIG. 2a and other relevant parts of the embodiments related to FIG. 2a, and details will not be repeated here.

In order to better understand the embodiments of the present disclosure, the present disclosure is further described below through some example embodiments.

### Example 1

Solution 1: For an R19 NES capable UE, if a UE temporarily cannot acquire an SIB1 of an on-demand SIB1 required cell, the UE lifts a cell barred restriction.

For example,

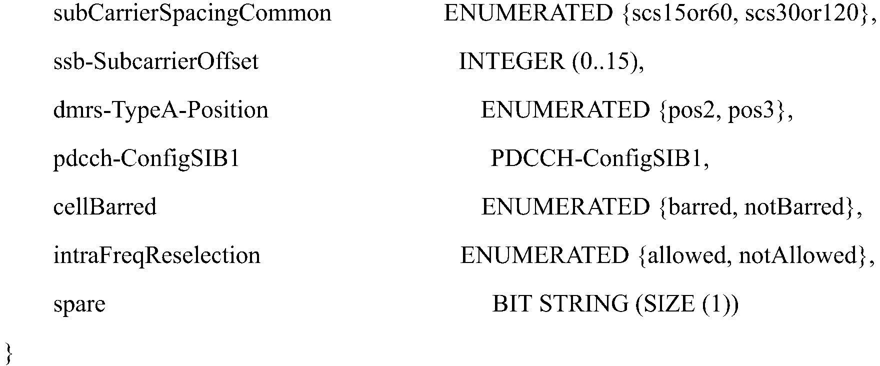

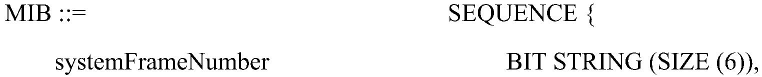

In some embodiments, the R19 NES capable UE refers to a UE that supports an on-demand SIB1 function.

In some embodiments, if a UE acquires an MIB of a cell and attempts to acquire an SIB1, and if the UE fails to acquire the SIB1, the UE considers the cell as barred, and a maximum barred duration is 300 seconds.

In some embodiments, based on an configuration of intraFreqReselection in the MIB: if it is configured as allowed, the UE may select a neighbor cell on the same frequency as the cell or a cell on another frequency layer; if it is configured as not allowed, the UE cannot select a neighbor cell on the same frequency as the cell and can only select a cell on another frequency layer.

For example, if the UE selects a certain cell and acquires configuration information for requesting the SIB1 of a cell from which it previously failed to acquire the SIB1, or acquires, via a neighbor cell, a cell list that supports an SIB1 request and the cell list includes the certain cell, then the UE lifts a restriction that the certain cell is in the barred status for 300 seconds.

### Example 2

Solution 2: For an R19 NES capable UE, if the UE temporarily cannot acquire an SIB1 of an on-demand SIB1 required cell, the UE considers the cell as barred for 3 seconds.

In some embodiments, the R19 NES capable UE refers to a UE that supports an on-demand SIB1 function.

In some embodiments, if a UE acquires an MIB of a cell and attempts to acquire an SIB1, and if the UE fails to acquire the SIB1, the UE considers the cell as barred. If the UE can learn that the cell is the on-demand SIB1 required cell, the UE determines that a maximum period for which the cell is in the barred status is 3 seconds (3 seconds are an example, in any case a value shorter than 300 seconds).

In some embodiments, based on an configuration of intraFreqReselection in the MIB: if it is configured as allowed, the UE may select a neighbor cell on the same frequency as the cell or a cell on another frequency layer; if it is configured as not allowed, the UE cannot select a neighbor cell on the same frequency as the cell and can only select a cell on another frequency layer.

In some embodiments, if a UE acquires an MIB of a cell and attempts to acquire an SIB1, and if the UE fails to acquire the SIB1, and if the UE can learn that the cell is an on-demand SIB1 required cell, then the UE considers the cell as not barred.

In some embodiments, the UE may determine that a current cell is the on-demand SIB1 required cell in at least one of the following ways: a bit, e.g., a spare bit, in the MIB indicates that the cell is the on-demand SIB1 required cell, or to indicate that the cell is not barred for the R19 NES capable UE. The UE obtains, from stored information acquired from other cells or the current cell, information indicating that the cell is an on-demand SIB1 required cell; a PCI, a PCI range or PCI list reserved by a system for cells supporting the SIB1 request; a frequency list, i.e., a frequency list reserved by the system for cells supporting the SIB1 request; a value of KSSB corresponding to ssb-SubcarrierOffset in the MIB is in a range of 0 to 23 (for FR1) and 0 to 11 (for FR2), and the SIB1 cannot be acquired, or cellbarred is set to barred.

### Example 3

Solution 3: The MIB indicates resource configuration information for requesting the SIB1.

In some embodiments, if the UE cannot acquire the SIB1 in the current cell and can determine that the cell is a cell supporting the SIB1 request, the MIB may further indicate a target cell from which the UE can acquire the resource configuration information for requesting the SIB1, for example, a PCI or frequency, or a PCI and frequency.

In the embodiments of the present disclosure, some or all of the steps and optional implementations thereof may be arbitrarily combined with some or all steps in other embodiments, and may also be arbitrarily combined with optional implementations of other embodiments.

The embodiments of the present disclosure further provide an apparatus for implementing any of the above methods, for example, an apparatus is provided, and the above apparatus includes a unit or module for implementing each step performed by the UE in any of the above methods. For another example, another apparatus is also provided, including a unit or module for implementing each step performed by a network device (such as an access network device, a core network function node, a core network device, etc.) in any of the above methods.

It should be understood that a division of the unit or module in the apparatus is only a division of a logical function, and in actual implementation, they may be fully or partially integrated into one physical entity, or they may be physically separated. In addition, the unit or module in the apparatus may be implemented in the form of a processor calling software. For example, the apparatus includes a processor, the processor is connected to a memory, and instructions are stored in the memory. The processor calls the instructions stored in the memory to implement any of the methods or implement a function of the unit or module of the apparatus. The processor is, for example, a general-purpose processor, such as a central processing unit (CPU) or a microprocessor, and the memory is a memory inside the apparatus or a memory outside the apparatus. Alternatively, the unit or module in the apparatus may be implemented in the form of a hardware circuit, and the hardware circuit is designed to implement a function of some or all of the units or modules. The above hardware circuit may be understood as one or more processors. For example, in an implementation, the hardware circuit is an application-specific integrated circuit (ASIC), and the functions of some or all of the units or modules are implemented by designing a logical relationship of components in the circuit. For another example, in another implementation, the hardware circuit may be implemented by a programmable logic device (PLD). Taking a field programmable gate array (FPGA) as an example, which may include a large number of logic gate circuits, and a connection relationship between the logic gate circuits is configured by a configuration file, so as to implement the functions of some or all of the units or modules. All of the units or modules of the apparatus may be implemented in the form of a processor calling a software, or in the form of a hardware circuit, or in part by the processor calling the software and the rest by the hardware circuit.

In the embodiments of the present disclosure, the processor is a circuit with a signal processing capability. In an implementation, the processor may be a circuit with an instruction reading and an execution capability, such as a central processing unit (CPU), a microprocessor, a graphics processing unit (GPU) (which may be understood as a microprocessor), or a digital signal processor (DSP). In another implementation, the processor may implement certain functions through a logical relationship of the hardware circuit, and the logical relationship of the hardware circuit may be fixed or reconfigurable. For, example, the processor is a hardware circuit implemented by the application-specific integrated circuit (ASIC) or the programmable logic device (PLD), such as the FPGA. In a reconfigurable hardware circuit, a process of the processor loading a configuration file to implement a hardware circuit configuration may be understood as a process of the processor loading instructions to implement the functions of some or all of the units or modules. In addition, it may also be a hardware circuit designed for artificial intelligence, which may be understood as the ASIC, such as a neural network processing unit (NPU), a tensor processing unit (TPU), a deep learning processing unit (DPU), etc.

FIG. 6a is a block diagram illustrating a UE 6100 according to an embodiment of the present disclosure. As shown in FIG. 6a, the UE 6100 may include at least one of a transceiver module 6101, a processing module 6102, etc. In some embodiments, the transceiver module 6101 is configured to receive first information. Optionally, the transceiver module 6101 is configured to perform at least one of the communication steps such as sending and/or receiving steps performed by the UE 6100 in any of the above methods, which will not be repeated here. Optionally, the processing module 6102 is configured to perform at least one of other steps performed by the UE 6100 in any of the above methods, which will not be repeated here.

FIG. 6b is a block diagram illustrating a network device 6200 according to an embodiment of the present disclosure. As shown in FIG. 6b, the network device 6200 may include at least one of a transceiver module 6201, a processing module 6202, etc. In some embodiments, the transceiver module 6201 is configured to send first information. Optionally, the transceiver module 6201 is configured to perform at least one of the communication steps such as sending and/or receiving steps performed by the UE 6200 in any of the above methods, which will not be repeated here. In some embodiments, the transceiver module 6201 may include a sending module and/or a receiving module, and the sending module and the receiving module may be separate or integrated together. Optionally, the transceiver module 6201 may be interchangeable with a transceiver. Optionally, the processing module 6202 is configured to perform at least one of other steps performed by the network device 6200 in any of the above methods, which will not be repeated here.

In some embodiments, the processing module can be a single module or include multiple submodules. Optionally, the multiple submodules respectively execute all or part of steps required to be executed by the processing module. Optionally, the processing module may be interchangeable with a processor.

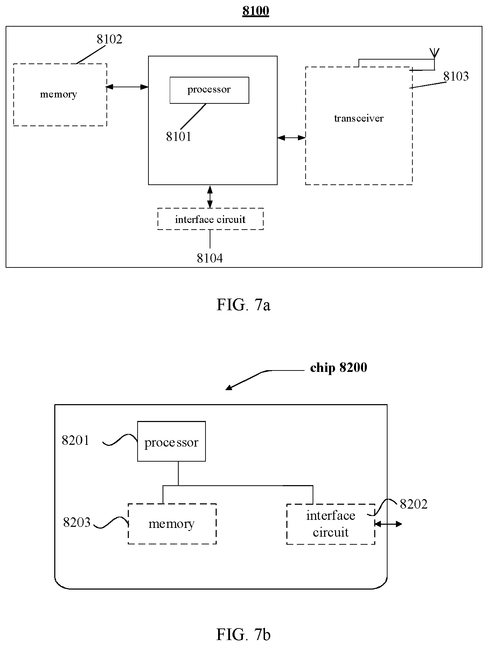

FIG. 7a is a block diagram illustrating a communication device 8100 according to an embodiment of the present disclosure. The communication device 8100 may be a network device (e.g., an access network device, a core network device, etc.), or a terminal (e.g., a user device, etc.), or a chip, a chip system, or a processor that supports a network device to implement any of the above methods, or a chip, a chip system, or a processor that supports a terminal to implement any of the above methods. The communication device 8100 may be configured to implement the methods described in the above method embodiments, and for details, reference may be made to the descriptions in the above method embodiments.

As shown in FIG. 7a, the communication device 8100 includes one or more processors 8101. The one or more processors 8101 may be a general-purpose processor or a dedicated processor, etc., for example, a baseband processor or a central processing unit. The baseband processor may be configured to process a communication protocol and communication data. The central processing unit may be configured to control a communication device (such as a base station, a baseband chip, a terminal device, a terminal device chip, a DU or a CU, etc.), perform a program, and process data of programs. The communication device 8100 is configured to perform any of the above methods.

In some embodiments, the communication device 8100 further includes one or more memories 8102 for storing instructions. Optionally, all or part of one or more memories 8102 may also be outside the communication device 8100.

In some embodiments, the communication device 8100 further includes one or more transceivers 8103. When the communication device 8100 includes one or more transceivers 8103, the one or more transceivers 8103 perform at least one of the communication steps such as sending and/or receiving steps in the above method, and the one or more processor 8103 performs at least one of other steps.

In some embodiments, the transceiver may include a receiver and/or a transmitter, and the receiver and the transmitter may be separate or integrated together. Optionally, terms such as transceiver, transceiver unit, transceiver circuit, etc. may be used interchangeably, terms such as transmitter, transmission unit, transmission circuit, etc. may be used interchangeably, and terms such as receiver, receiving unit, receiving circuit, etc. may be used interchangeably.

In some embodiments, the communication device 8100 may include one or more interface circuits 8104. Optionally, the one or more interface circuits 8104 are connected to the memory 8102, and the one or more interface circuits 8104 may be configured to receive signals from the memory 8102 or other devices, and may be configured to send signals to the memory 8102 or other devices. For example, the one or more interface circuits 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and a structure of the communication device 8100 may not be limited by FIG. 7a. The communication device may be an independent device or may be part of a larger device. For example, the communication device may be: (1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

FIG. 7b is a block diagram illustrating a chip 8200 according to an embodiment of the present disclosure. In a case that the communication device 8100 may be a chip or a chip system, reference may be made to the block diagram illustrating the chip 8200 shown in FIG. 7b, but the present disclosure is not limited thereto.

The chip 8200 includes one or more processors 8201, and the chip 8200 is configured to perform any of the above methods.

In some embodiments, the chip 8200 further includes one or more interface circuits 8202. Optionally, the one or more interface circuits 8202 are connected to a memory 8203. The one or more interface circuits 8202 may be used to receive signals from the memory 8203 or other devices, and the one or more interface circuits 8202 may be configured to send signals to the memory 8203 or the other devices. For example, the one or more interface circuits 8202 may read instructions stored in the memory 8203 and send the instructions to the processor 8201.

In some embodiments, the one or more interface circuits 8202 perform at least one of the communication steps such as sending and/or receiving steps in the above method, and the processor 8201 performs at least one of other steps.

In some embodiments, terms such as interface circuit, interface, transceiver pin, and transceiver may be used interchangeably.

In some embodiments, the chip 8200 further includes one or more memories 8203 for storing instructions. Optionally, all or part of the one or more memories 8203 may be outside the chip 8200.

The present disclosure further provides a storage medium, on which instructions are stored. When the instructions are executed on the communication device 8100, the communication device 8100 executes any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a temporary storage medium.

The present disclosure further provides a program product, which, when executed by the communication device 8100, enables the communication device 8100 to perform any of the above methods. Optionally, the program product is a computer program product.

The present disclosure also further provides a computer program, which, when executed on a computer, causes the computer to perform any of the above methods.

## Claims

1. A communication method, performed by a user equipment (UE), comprising:
determining whether a first cell is in a barred status based on a first result;
wherein the first result indicates that a system information block 1 (SIB1) is available or not available in the first cell; the barred status is a status in which the UE is barred from camping on the first cell, and the first cell is a cell capable of transmitting an SIB1 based on a request.

2. The method according to claim 1, wherein determining whether the first cell is in the barred status based on the first result comprises:
determining that the SIB1 is not available in the first cell, and determining that the first cell is in the barred status.

3. The method according to claim 2, further comprising:
determining that a period for which the first cell is in the barred status is a first duration.

4. The method according to claim 1, wherein determining whether the first cell is in the barred status based on the first result comprises:
acquiring first information; and
determining whether the first cell is in the barred status based on the first result and a second result;
wherein the second result indicates whether the first information is available or not available; and the first information indicates that the first cell is a cell capable of transmitting an SIB1 based on a request.

5. The method according to claim 4, wherein determining whether the first cell is in the barred status based on the first result and the second result comprises one of:
determining that the SIB1 is not available in the first cell and the first information is available, and determining that the first cell is in the barred status; or
determining that the SIB1 is not available in the first cell and the first information is available, and determining that the first cell is not in the barred status.

6. The method according to claim 5, further comprising:
determining that a period for which the first cell is in the barred status is a second duration;
wherein the second duration is less than a first duration.

7. The method according to claim 4 or 5, wherein the method further comprises one of:
determining the first information based on an information field of a master information block (MIB);
determining the first information based on second information, wherein the second information is information acquired from the first cell or a third cell;
determining the first information based on third information, wherein the third information indicates a physical cell identity (PCI);
determining the first information based on fourth information, wherein the fourth information indicates a frequency list; or
determining the first information based on a reference quantity, wherein the reference quantity is determined based on synchronization signal block (SSB) subcarrier offset (ssb-SubcarrierOffset) information in an MIB.

8. The method according to claim 2 or 5, wherein the first cell is in the barred status, and the method further comprises:
determining a second cell based on first configuration information comprised in an MIB;
wherein the second cell is a cell on which the UE camps.

9. The method according to claim 8, wherein determining the second cell based on the first configuration information comprised in the MIB comprises one of:
determining that the first configuration information indicates a first value, and determining that the second cell is a cell on the same frequency as the first cell;
determining that the first configuration information indicates a first value, and determining that the second cell is a cell on a different frequency layer from the first cell;
determining that the first configuration information indicates a second value, and determining that the second cell is not a cell on the same frequency as the first cell; or
determining that the first configuration information indicates a second value, and determining that the second cell is a cell on a different frequency layer from the first cell.

10. The method according to claim 9, further comprising:
determining that the UE camps on the second cell and acquires second configuration information, and determining the first cell is no longer barred;
wherein the second configuration information indicates information for acquiring an SIB1 in the first cell based on a request.

11. The method according to claim 10, wherein the second configuration information indicates a cell list, the cell list comprises a cell supporting acquiring an SIB1 based on a request, and the cell list comprises the first cell.

12. The method according to claim 1, wherein the first cell is a cell capable of transmitting the SIB1 based on a request, and the method further comprises:
receiving an MIB;
wherein the MIB indicates a target cell, the target cell is a cell from which the UE capable of acquiring third configuration information, and the third configuration information indicates a resource for requesting the SIB1.

13. The method according to any one of claims 1-12, wherein the UE is a network energy saving capable user equipment (NES capable UE).

14. A communication method, performed by a network device, comprising:
sending first information to a user equipment (UE);
wherein the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; and the barred status is a status in which the UE is barred from camping on the first cell.

15. The method of claim 14, wherein the first information indicates at least one of:
a frequency list; or
a reference quantity, wherein the reference quantity is determined based on synchronization signal block (SSB) subcarrier offset (ssb-SubcarrierOffset) information in a master information block (MIB).

16. The method of claim 1, further comprising:
sending an MIB;
wherein the MIB indicates a target cell, the target cell is a cell on which the UE is capable of acquiring third configuration information, and the third configuration information indicates a resource for requesting an SIB1.

17. The method according to any one of claims 14-16, wherein the UE is a network energy saving capable user equipment (NES capable UE).

18. A communication method, comprising:
sending, by a network device, first information to a user equipment (UE);
wherein the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; the barred status is a status in which the UE is barred from camping on the first cell; and the first cell is a cell capable of transmitting the SIB1 based on a request.

19. A user equipment (UE), comprising:
a transceiver module, configured to determine whether a first cell is in a barred status based on a first result;
wherein the first result indicates that a system information block 1 (SIB1) is available or not available in the first cell; the barred status is a status in which the UE is barred from camping on the first cell; and the first cell is a cell capable of transmitting an SIB1 based on a request.

20. A network device, comprising:
a transceiver module, configured to send first information to a user equipment (UE);
wherein the first information indicates that a first cell is a cell capable of transmitting a system information block 1 (SIB1) based on a request; a first result and a second result are used for the UE to determine whether the first cell is in a barred status; the first result indicates that the SIB1 is available or not available in the first cell; the second result indicates that the first information is available or not available; and the barred status is a status in which the UE is barred from camping on the first cell.

21. A communication system, comprising a user equipment (UE) and a network device, wherein the UE is configured to perform the method according to any one of claims 1 to 13, and the network device is configured to perform the method according to any one of claims 14 to 17.

22. A user equipment (UE), comprising:
one or more processors;
wherein the UE is configured to perform the method according to any one of claims 1 to 13.

23. A network device, comprising:
one or more processors;
wherein the network device is configured to perform the method according to any one of claims 14 to 17.

24. A storage medium for storing instructions that, when executed on a communication device, cause the communication device to perform the method according to any one of claims 1 to 13 or the method according to any one of claims 14 to 17.
